# EUROPEAN PATENT SPECIFICATION

(11) **EP 0 628 961 B1**
(45) Date of publication and mention of the grant of the patent: **03.06.1998**
(21) Application number: 94114278.8
(22) Date of filing: 09.03.1989
(51) Int. Cl.: G11B 15/29, G11B 15/43

(54) **A tape tensioning mechanism**
Bandspannvorrichtung
Mécanisme de tension de bande

(30) Priority: 15.03.1988 JP 62126/88; 29.07.1988 JP 191374/88; 17.09.1988 JP 232918/88; 06.10.1988 JP 252322/88; 28.07.1988 JP 100345/88; 31.08.1988 JP 115404/88
(43) Date of publication of application: 14.12.1994
(62) Divisional of application: 89302329.1
(73) Proprietor: MITSUBISHI DENKI KABUSHIKI KAISHA, Chiyoda-ku Tokyo-to, 100 (JP)
(72) Inventor: Fujiwara, Osamu, c/o Mitsubishi Denki K.K., Nagaokakyo-shi, Kyotofu (JP); Nakagawa, Kunihiko, c/o Mitsubishi Denki K. K., Nagaokakyo-shi, Kyotofu (JP); Kakuta, Yoshinori, c/o Mitsubishi Denki K. K., Nagaokakyo-shi, Kyotofu (JP); Tomita, Masami, c/o Mitsubishi Denki K. K., Nagaokakyo-shi, Kyotofu (JP); Kishikawa, Seiji, c/o Mitsubishi Denki K. K., Nagaokakyo-shi, Kyotofu (JP); Yuri, Tooru, c/o Mitsubishi Denki K. K., Nagaokakyo-shi, Kyotofu (JP)
(74) Representative: Barnard, Eric Edward

(56) References cited:
- PATENT ABSTRACTS OF JAPAN vol. 10, no. 237 (P-487) 15 August 1986 & JP-A-61 068 763 (HITACHI LTD) 9 April 1986
- PATENT ABSTRACTS OF JAPAN vol. 10, no. 316 (P-510) 28 October 1986 & JP-A-61 126 655 (CANON INC) 14 June 1986
- PATENT ABSTRACTS OF JAPAN vol. 12, no. 154 (P-700) (3001) 12 May 1988 & JP-A-62 270 048 (SANKYO SEIKI MFG CO LTD) 24 November 1987
- PATENT ABSTRACTS OF JAPAN vol. 10, no. 348 (P-519) 22 November 1986 & JP-A-61 148 655 (MATSUSHITA ELECTRIC IND CO LTD) 7 July 1986

## Description

The invention concerns a tape tensioning mechanism for a magnetic tape recording and playback apparatus with a magnetic tape loading mechanism, in particular, a helical scan system as used in a video tape recorder and digital audio tape recorder.

In a conventional magnetic tape recording and playback apparatus with a helical scan system, a rotating drum equipped with a magnetic head device that has rotating magnetic heads is, for example, installed on a mechanical chassis in a state coaxial with a fixed drum. A magnetic tape is made to run along the peripheries of these drums so that when the heads rotate at high speed, recording tracks are formed at an inclined angle on the tape. In this way, signals may be recorded or played back.

In such a magnetic tape recording and playback apparatus, there is provided a loading mechanism which takes out the tape from a tape cassette, and winds it around the drums automatically. This loading mechanism comprises a loading block with tape guides, such as a return guide and an inclined guide which engage with and guide the magnetic tape.

The loading block may be driven by a rotating member such as a loading ring which rotates so as to bring the tape from the cassette to a specific loading position near the drums. The rotating member is driven by a motor and the position of the loading block is detected by a switch.

This magnetic tape recording and playback apparatus also has a pinch roller pressure mechanism which presses a pinch roller on a capstan. The pressure mechanism may comprise a pinch arm which is for example free to pivot at one end, the other end thereof being fitted with the pinch roller, and the pinch roller being pressed to the capstan by the action of a solenoid or of a control motor and cam.

In this apparatus, when the pinch roller is pressed against the capstan (i.e. when the pinch roller is ON), the magnetic tape runs at a constant rate, and when the pinch roller is released from the capstan (i.e. when the pinch roller is OFF), the magnetic tape can be moved in fast forward or rewind mode etc.

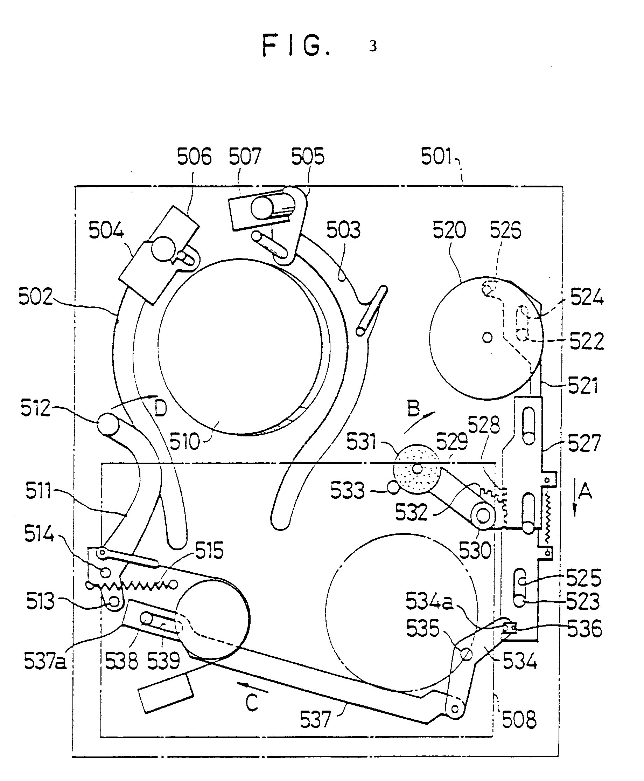

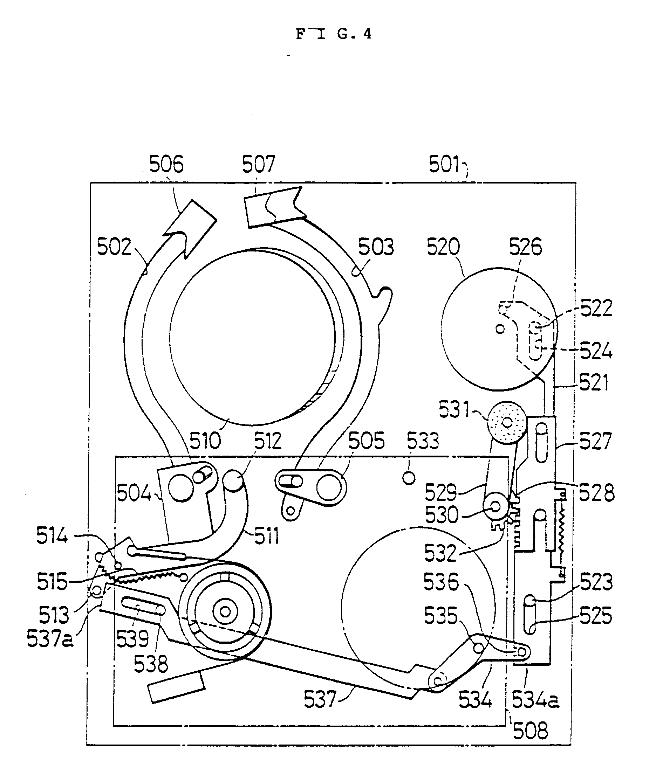

Figs. 3 and 4 are plan views of a conventional magnetic tape recording and playback apparatus in states of loading and unloading, respectively, as disclosed in Utility Model Application Laid-Open No. 105938/1986. In the figures 501 is a chassis, 502 and 503 are guide grooves formed on chassis 501, and 504 and 505 are tape loading blocks. 506 and 507 are stoppers for stopping tape loading blocks 504 and 505 at specific positions. 510 is a rotating drum, and 511 is a tension arm. 512 and 513 are a tension post and a pin attached to one end and another of tension arm 511, respectively. 514 is a pivot fixed on chassis 501 for pivotably supporting tension arm 511. 515 is a spring for pulling tension arm 511 in the anticlockwise direction. Loading cam member 520 is driven by a motor (not shown). The first sliding lever 521 has slots 524 and 525 in which pins 522 and 523 attached on chassis 501 are inserted so that lever 521 can slide linearly on chassis 501. Lever 521 slides linearly in accordance with rotation of loading cam member 520 because pin 526 fixed on lever 521 engages with a cam groove (not shown) formed on loading cam member 520. The second sliding lever 527 having rack 528 is mounted on lever 521 so as to be slidable. Pinch arm 529 having pinch roller 531 is supported rotatably on chassis 501 through pin 530. 532 is a gear portion engaging with rack 528, and 533 is a capstan mounted on chassis 501. Arm 534 having pin 534a engaging with groove 536 formed on lever 521 is supported rotatably on chassis 501 through pin 535. 537 is a slidable lever of which one end is connected with arm 534 and another has slot 539 in which pin 538 fixed on chassis 501 is inserted.

A transmission mechanism (not shown) is interposed between loading cam member 520 and tape loading blocks 504 and 505, so that tape loading blocks 504 and 505 can move according to rotation of loading cam member 520.

The operation will be described below. In the state of loading shown in Fig. 3 tape loading blocks 504 and 505 engage with stoppers 506 and 507, pinch roller 531 is pressed on capstan 533, and a magnetic tape (not shown) is loaded in a specific path so that information can be recorded and played back. At this time tension arm 511 is located in the loading position so as to be able to control a tension of magnetic tape.

When unloading is started, loading cam member 520 is rotated by a motor, and in accordance with the rotation, the first sliding lever 521 moves in the direction of arrow A. Since gear portion 532 is engaging with rack 528, pinch arm 529 is rotated in the direction of arrow B. Arm 534 is rotated by engagement between pin 534a and groove 536, so lever 537 moves in the direction of arrow C. When end 537a of lever 537 engages with pin 513 attached on tension arm 511, tension arm 511 is rotated in the direction of arrow D. Also tape loading blocks 504 and 505 are moved in the directions of unloading by rotation of loading cam member 520 through transmission mechanism.

Rotation of loading cam member 520 brings the unloading state as shown in Fig. 4, where tape loading blocks 504 and 505, and tension post 512 are located inside of tape cassette 508.

Loading operation will be described below. The operation is reverse to the unloading one. Namely, according to the rotation of a motor, tape loading blocks 504 and 505 moves along guide grooves 502 and 503, and engage with stoppers 506 and 507, respectively. Also, the first lever 521, arm 534 and lever 537 move in the directions reverse to the unloading ones by the rotation of loading cam member 520. Since pulled by spring 515 in the anticlockwise direction, tension arm 511 is rotated in the anticlockwise direction while maintaining contact between pin 513 and end 537a of lever 537. When tension arm 511 reaches a specific position, end 537a is separated from pin 513, so that tension arm 511 can control a tape tension.

The conventional magnetic tape recording and playback apparatus described above suffers from problems arising as a result of the tension arm 511 being located far from loading cam 520 which drives it, and the drive transmission mechanism from the cam to the arm therefore needs many components such as levers. As a result, it is difficult to ensure the precision of components or dimensional precision among many components, and the structure also takes up too much space.

JP-A-61126655 describes a tape tensioning mechanism with a pivotable member in the form of a fan shaped plate which is pivotable about a pivot, a tension arm which is pivotable about the same pivot and a spring connected between the pivotable member and the tension arm. A tension post on the tension arm serves to engage on a magnetic tape and exert tension when the pivotable member is displaced along with the tension arm. In this arrangement since the tension arm is linked to the pivotable member with a common pivot and a spring it is not possible to control the tension so effectively.

The object of the invention is to solve the problems stated above.

A further object of the invention is to provide a magnetic tape recording and playback device which is thin and compact with more freedom in arrangement of the components.

According to the invention and as is known from JP-A-61126655 there is provided a tape tensioning mechanism for a magnetic tape recording and playback apparatus, the mechanism comprising: a pivotable member in the form of a fan shaped plate which is pivotable about a first pivot, a tension arm which is pivotable, a first spring operably connected to the tension arm and a tension post provided on the tension arm, wherein the tension post is either separated from a magnetic tape and inoperative or is urged against a magnetic tape by the first spring and is operative to tension the tape and the pivotable member is provided with a device which serves to move the tension arm in such a direction that the tension post is separated from the magnetic tape in opposition to the force of the first spring. In contrast to JP-A-61126655 and in accordance with the invention the tension arm is pivotable about a second pivot spaced from the first pivot and the device comprises a pin attached to the pivotable member and a transmission arm engageable with the pin which engages with and moves the tension arm in such a direction that the tension post is separated from the magnetic tape when the transmission arm is free of engagement with the pin.

Reference with now be made to the accompanying figures wherein:

Fig. 1 is a plan view of a magnetic tape recording and playback apparatus provided with a tensioning mechanism in accordance with an embodiment of the invention.

Fig. 2 is a plan view corresponding to Figure 1 but showing the tensioning mechanism in a released state.

Fig. 3 is a plan view of a conventional apparatus in a state of loading and.

Fig. 4 is a plan view of the apparatus shown in Fig. 3 in a state of unloading.

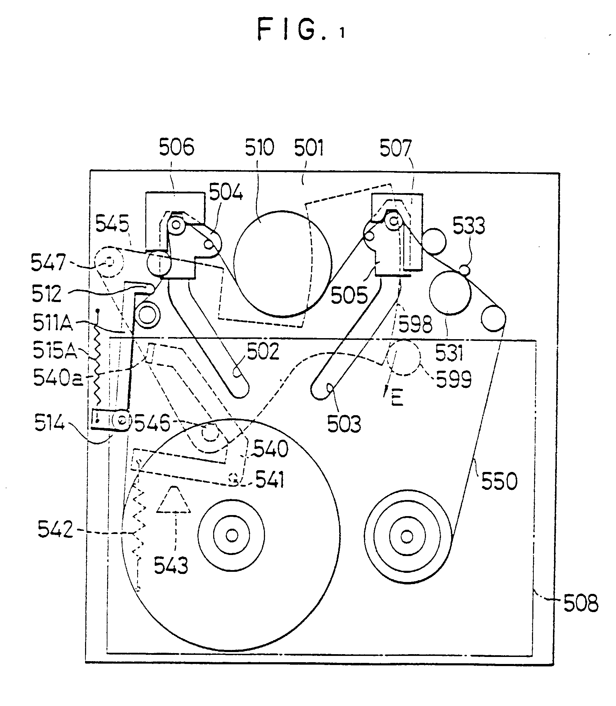

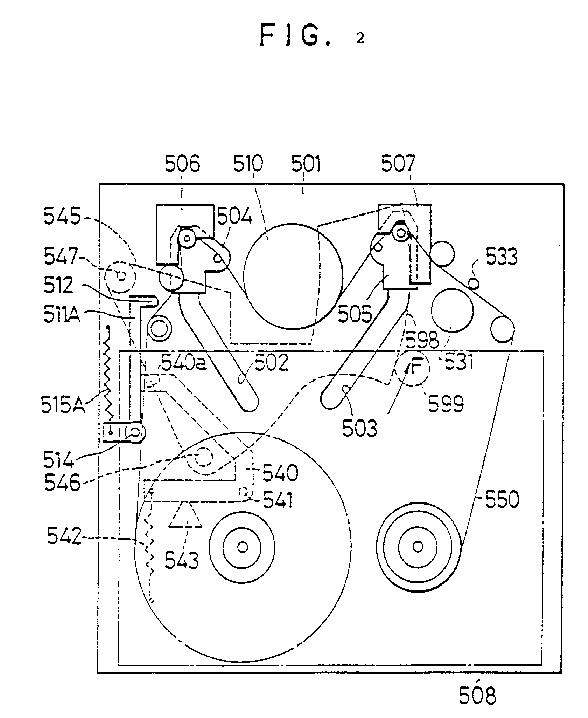

An embodiment of the invention will be described below with reference to Figs. 1 and 2 which are plan views showing a tension arm in states of loading and unloading, respectively. Identical or equivalent elements to those in said conventional apparatus shown in Figs. 3 and 4 are given identical numbers, and their descriptions are therefore omitted.

In the Figures, 511A is a tension arm which is pulled in the clockwise direction by spring 515A interposed between one end of tension arm 511A and chassis 501. Transmission arm 540 supported rotatably on chassis 501 through pivot 541 is pulled in the anticlockwise direction by spring 542 interposed between one end of transmission arm 540 and chassis 501. 543 is a stop mounted on chassis 501 for stopping transmission arm 540. Fan-shaped pivotable member 545 with pin 546 is supported rotatably on chassis 501 through pivot 547. 599 is a gear which is driven by a motor not shown and engages with gear portion 598 formed on the periphery of pivotable member 545.

Now the operation will be described below. In Fig. 1 which is a plan view showing a state of loading of magnetic tape and tension arm, magnetic tape 550 is located in a path where recording and playback can be done. At the time of unloading, pivotable member 545 is rotated in the direction of arrow E by a motor through gear 599 and gear portion 598. Accordingly, pin 546 fitted on pivotable member 545 rotates in the direction of arrow E, and transmission arm 540, engaging with pin 546, rotates together with pin 546 in the anticlockwise direction because spring 542 pulls arm 540 in that direction. When end 540a of transmission arm 540 engages with the middle of tension arm 511A, tension arm 511A is rotated on pivot 514 in the anticlockwise direction in opposition to the force of spring 515A which is weaker than that of spring 542. Therefore, tension post 512 is separated from magnetic tape 550 and comes into the unloading state. Although pivotable member 545 rotates further in the direction of arrow E, transmission arm 540 is kept in a specific position where it engages with stop 543.

At the time of loading, a motor is rotated and pivotable member 545 starts to rotate through gear 599 and gear portion 598 in the direction of arrow F in Fig. 6. When pin 546 fixed on pivotable member 545 engages with the middle of transmission arm 540, transmission arm 540 rotates on pivot 541 attached on chassis 501 in the clockwise direction in opposition to the force of spring 542. Since pulled by spring 515A, tension arm 511A rotates on pivot 514 fitted on chassis 501 in the clockwise direction in accordance with the rotation of end 540a of transmission arm 540 in the clockwise direction. Therefore, tension post 512 attached on tension arm 511A engages with magnetic tape 550. When end 540a is separated from tension arm 511A by further rotation of transmission arm 540 in the clockwise direction, tension arm 511A stops in the state where the tensions of spring 515A and magnetic tape 550 balance each other as shown in Fig. 1. Thus the tension of magnetic tape is controlled.

When the plane of pivotable member 545 is wide, the degree of freedom to attach pin 546 on the plate is improved, so it can be located at the best position in order to load tension arm 511A efficiently.

## Claims

1. A tape tensioning mechanism for a magnetic tape recording and playback apparatus, said mechanism comprising a pivotable member (545) in the form of a fan shaped plate which is pivotable about a first pivot (547), a tension arm (511A) which is pivotable, a first spring (515A) operably connected to the tension arm (511A) and a tension post (512), provided on the tension arm (511A), wherein the tension post is either separated from a magnetic tape (550) and inoperative or is urged against a magnetic tape (550) by the first spring (515A) and is operative to tension the tape and the pivotable member (545) is provided with a device which serves to move the tension arm (511A) in such a direction that the tension post (512) is separated from the magnetic tape in opposition to the force of the first spring (515A); characterised in that the tension arm (511A) is pivotable about a second pivot (514) spaced from the first pivot (547) and the device comprises a pin (546) attached to the pivotable member (545) and a transmission arm (540) engageable with the pin (546) which engages with and moves the tension arm (511A) in such a direction that the tension post (512) is separated from the magnetic tape when the transmission arm (540) is free of engagement with the pin (546).

2. A mechanism according to claim 1, wherein the transmission arm (540) is pivotable about a third pivot (541), and the device further comprises a second spring (542) for urging the transmission arm (540) in such a direction as to engage with the tension arm (511A) to cause the tension post (512) to be separated from the magnetic tape (550).

3. A mechanism according to claim 2, wherein the tension arm (511A), the first spring (515A), the pivotable member (545), and the transmission arm (540) are all movable between first positions and second positions,
the arrangement being such that when the tension arm (511A), the first spring (515A), the pivotable member (545) and the transmission arm (540) are in their respective first positions, the tension post (512) is separated from the magnetic tape (550), and when the pivotable member (545) is moved from its first position to its second position, the transmission arm (540) is moved from its first position to its second position, due to engagement with the pin (546), against the biasing force of the second spring (542), and the tension arm (511A) is moved from its first position to its second position due to the biasing force of the first spring (515A) so that the tension post (512) is urged against the magnetic tape (550) due to the force of the first spring (515A).

4. A mechanism according to claim 3, wherein when the pivotable member (545) is moved from its second position to its first position, the transmission arm (540) is moved from its second position to its first position, due to the force of the second spring (542), the tension arm (511A) is moved from its second position to its first position, by engagement with the transmission arm (540) and overcoming the force of the first spring (515A), so that the tension post (512) is separated from the magnetic tape (550).

5. A mechanism according to claim 4, further comprising means (599) for driving the pivotable member (545) between its first and second positions.

6. A mechanism according to claim 5, and further comprising a gear portion (598) formed on the periphery of the pivotable member (545), and a gear (599) which engages with the gear portion (598) and drives the pivotable member (545), said gear (598) forming part of said means (599) for rotating the pivotable member (545).

7. A mechanism according to any one of claims 2 to 6, wherein the first spring (515A) is weaker than the second spring (542).

8. A mechanism according to any one of the preceding claims wherein a stop (543) is provided to engage with the transmission arm (540) when the transmission arm (540) engages with the tension arm (511A) to move the latter to cause the tension post (512) to be separated from the tape (550).

## Patentansprüche

1. Bandspannvorrichtung für ein magnetisches Bandaufzeichnungs- und Wiedergabegerät, wobei die genannte Vorrichtung umfaßt: ein drehbares Element (545) in Form einer fächerförmigen Platte, die um ein erstes Drehgelenk (547) drehbar ist, einen Spannarm (511A), der drehbar ist, eine erste Feder (515A), die funktionell mit dem Spannarm (511A) verbunden ist und eine Spannstütze (512), die an dem Spannarm (511A) vorgesehen ist, wobei die Spannstütze entweder von einem Magnetband (550) getrennt und nicht in Betrieb ist oder gegen ein Magnetband (550) durch die erste Feder (515A) gezwungen und in Betrieb ist, um das Band zu spannen und wobei das drehbare Element (545) mit einer Einrichtung versehen ist, die dazu dient, den Spannarm (511A) in eine derartige Richtung zu bewegen, daß die Spannstütze (512) von dem Magnetband gegen die Kraft der ersten Feder (515A) getrennt wird,
dadurch **charakterisiert,**
daß der Spannarm (511A) um ein zweites Drehgelenk (514), das von dem ersten Drehgelenk (547) getrennt angeordnet ist, drehbar ist, und daß die Einrichtung umfaßt einen Stift (546), der an dem drehbaren Element (545) angeordnet ist, und einen Übertragungsarm (540), der mit dem Stift (546) in Eingriff geraten kann und der mit dem Spannarm (511A) in Eingriff gerät, und diesen in eine derartige Richtung bewegt, daß die Spannstütze (512) von dem Magnetband getrennt wird, wenn der Übertragungsarm (540) nicht mit dem Stift (546) im Eingriff steht.

2. Vorrichtung nach Anspruch 1, wobei der Übertragungsarm (540) um ein drittes Drehgelenk (541) drehbar ist, und die Einrichtung weiterhin umfaßt eine zweite Feder (542), um den Übertragungsarm (540) in eine derartige Richtung zu zwingen, daß er mit dem Spannarm (511A) in Eingriff tritt, um die Spannstütze (512) zu veranlassen, von dem Magnetband (550) getrennt zu werden.

3. Vorrichtung nach Anspruch 2, wobei der Spannarm (511A), die erste Feder (515A), das drehbare Element (545) und der Übertragungsarm (540) sämtlich zwischen ersten Stellungen und zweiten Stellungen bewegbar sind,
wobei die Anordnung derart ist, daß wenn der Spannarm (511A), die erste Feder (515A), das drehbare Element (545) und der Übertragungsarm (540) in ihren jeweiligen ersten Stellungen sind, die Spannstütze (512) von dem Magnetband (550) getrennt ist, und wenn das drehbare Element (545) von seiner ersten Stellung zu seiner zweiten Stellung bewegt wird, der Übertragungsarm (540) von seiner ersten Stellung zu seiner zweiten Stellung aufgrund des Eingriffs mit dem Stift (546) gegen die vorspannende Kraft der zweiten Feder (542) bewegt wird und der Spannarm (511A) von seiner ersten Stellung zu seiner zweiten Stellung aufgrund der vorspannenden Kraft der ersten Feder (515A) bewegt wird, so daß die Spannstütze (512) gegen das Magnetband (550) aufgrund der Kraft der ersten Feder (515A) gezwungen wird.

4. Vorrichtung nach Anspruch 3, wobei wenn das drehbare Element (545) von seiner zweiten Stellung zu seiner ersten Stellung bewegt wird, der Übertragungsarm (540) von seiner zweiten Stellung zu seiner ersten Stellung aufgrund der Kraft der zweiten Feder (542) bewegt wird, der Spannarm (511A) von seiner zweiten Stellung zu seiner ersten Stellung durch den Eingriff mit dem Übertragungsarm (540) und unter Überwindung der Kraft der ersten Feder (515) bewegt wird, so daß die Spannstütze (512) von dem Magnetband (550) getrennt wird.

5. Vorrichtung nach Anspruch 4, die weiterhin Mittel (599) zur Bewegung des drehbaren Elementes (545) zwischen seiner ersten und seiner zweiten Stellung umfaßt.

6. Vorrichtung nach Anspruch 5, die weiterhin ein Getriebeteil (598), das auf dem Umfang des drehbaren Elementes (545) ausgebildet ist, und ein Getriebe (599) umfaßt, das mit dem Getriebeteil (598) im Eingriff steht und das drehbare Element (545) antreibt, wobei das genannte Getriebe (598) einen Teil der genannten Mittel (599) zur Drehung des drehbaren Elementes (545) bildet.

7. Vorrichtung nach einem der Ansprüche 2 bis 6, wobei die erste Feder (515A) schwächer ist als die zweite Feder (542).

8. Vorrichtung nach einem der vorangehenden Ansprüche, wobei ein Anschlag (543) vorgesehen ist, um mit dem Übertragungsarm (540) im Eingriff zu geraten, wenn der Übertragungsarm (540) in den Spannarm (511A) eingreift, um letzteren zu bewegen, um die Spannstütze (512) zu veranlassen, von dem Band (550) getrennt zu werden.

## Revendications

1. Mécanisme de mise sous tension d'une bande pour appareil de lecture et d'enregistrement d'une bande magnétique, ledit mécanisme comprenant un élément pivotant (545) sous la forme d'une plaque en forme d'ailette pivotant autour d'un premier pivot (547), un bras de mise sous tension (511A) pivotant, un premier ressort (515a) connecté en fonctionnement au bras de mise sous tension (511a) et un poste de mise sous tension (512), prévu sur le bras de mise sous tension (511a), dans lequel le poste de mise sous tension est soit séparé d'une bande magnétique (550) et inopérant soit sollicité contre une bande magnétique (550) par le premier ressort (515a) et actif pour mettre sous tension la bande, et l'élément pivotant (545) est pourvu d'un dispositif qui sert à déplacer le bras de mise sous tension (511a) dans une direction telle que le poste de mise sous tension (512) est séparé de la bande magnétique à l'encontre de la force exercée par le premier ressort (515a); caractérisé en ce que le bras de mise sous tension (511a) est monté pivotant autour d'un deuxième pivot (514) espacé du premier pivot (547) et le dispositif comporte une broche (546) attachée à l'élément pivotant (545) et un bras de transmission (540) coopérant avec la broche (546) qui coopère et déplace le bras de mise sous tension (511a) dans une direction telle que le poste de mise sous tension (512) est séparé de la bande magnétique lorsque le bras de transmission (540) est dégagé de la broche (546).

2. Mécanisme selon la revendication 1, dans lequel le bras de transmission (540) est monté pivotant autour d'un troisième pivot (541) et en ce que le dispositif comporte en outre un deuxième ressort (542) pour solliciter le bras de transmission (540) dans une direction adaptée pour coopérer avec le bras de mise sous tension (511a) pour provoquer la séparation du poste de mise sous tension (512) de la bande magnétique (550).

3. Mécanisme selon la revendication 2, dans lequel le bras de mise sous tension (511a), le premier ressort (515a), l'élément pivotant (545), le bras de transmission (540) sont tous déplaçables entre des premières positions et deuxièmes positions,
l'agencement étant tel que lorsque le bras de mise sous tension (511a), le premier ressort (515a), l'élément pivotant (545) et le bras de transmission (540) sont dans leurs premières positions respectives, le poste de mise sous tension (512) est séparé de la bande magnétique (550), et lorsque l'élément pivotant (545) est déplacé de sa première position vers sa deuxième position, le bras de transmission (540) est déplacé de sa première position vers sa deuxième position, en raison de l'engagement avec la broche (546), à l'encontre de la force de sollicitation du deuxième ressort (542), et le bras de mise sous tension (511a) est déplacé de sa première position vers sa deuxième position en raison de la force de sollicitation du premier ressort (515a) de sorte que le poste de mise sous tension (512) est sollicité contre la bande magnétique (550) en raison de la force du premier ressort (515a).

4. Mécanisme selon la revendication 3, dans lequel lorsque l'élément pivotant (545) est déplacé de sa deuxième position vers sa première position, le bras de transmission (540) est déplacé de sa deuxième position vers sa première position, en raison de la force du deuxième ressort (542), le bras de mise sous tension (511a) est déplacé de sa deuxième position vers sa première position, par coopération avec le bras de transmission (540) et s'opposant à l'effort du premier ressort (515a), de sorte que le poste de mise sous tension (512) est séparé de la bande magnétique (550).

5. Mécanisme selon la revendication 4, comportant en outre des moyens (599) pour entraîner l'élément pivotant (545) entre ses première et ses deuxième positions.

6. Mécanisme selon la revendication 5, comportant en outre une portion de pignon (598) formée sur la périphérie de l'élément pivotant (545), et un pignon (599) qui coopère avec la portion de pignon (598) et entraîne l'élément pivotant (545), ledit pignon (598) formant une partie desdits moyens (599) pour entraîner en rotation l'élément pivotant (545).

7. Mécanisme selon l'une quelconque des revendications 2 à 6, dans lequel le premier ressort (515a) est plus faible que le deuxième ressort (542).

8. Mécanisme selon l'une quelconque des revendications précédentes, dans lequel une butée (543) est prévue pour coopérer avec le bras de transmission (540) lorsque le bras de transmission (540) coopère avec le bras de mise sous tension (511a) pour déplacer ce dernier pour provoquer la séparation du poste de mise sous tension (512) et de la bande (550).
